# EUROPÄISCHE PATENTSCHRIFT

(11) **EP 1 497 231 B1**
(45) Veröffentlichungstag und Bekanntmachung des Hinweises auf die Patenterteilung: **03.01.2007**
(21) Anmeldenummer: 02760284.6
(22) Anmeldetag: 26.07.2002
(51) Int. Cl.: C02F 3/20, B01F 3/04

(54) **Verwendung eines porösen Kunststoff-Formkörpers als Belüfter.**
Use of a porous plastic article as aerator
Utilisation d'un article en matière plastique comme aérateur

(30) Priorität: 23.04.2002 DE 10218073
(43) Veröffentlichungstag der Anmeldung: 19.01.2005
(73) Patentinhaber: Pfleiderer water systems GmbH, 92318 Neumarkt (DE)
(72) Erfinder: GIANGRASSO, Antonio, 90469 Nürnberg (DE)
(74) Vertreter: HOFFMANN EITLE
(86) Internationale Anmeldenummer: PCT/EP2002/008396
(87) Internationale Veröffentlichungsnummer: WO 2003/091169

(56) Entgegenhaltungen:
- EP-A- 1 101 873
- DE-A- 4 016 244
- GB-A- 1 051 032
- US-A- 2 297 248
- US-A- 5 679 248
- US-A- 6 030 558
- DATABASE WPI Section Ch, Week 0147 Derwent Publications Ltd., London, GB; Class D15, AN 2001-439877 XP002229143 & RU 2 169 706 C (ABRAMOV ET AL.), 27. Juni 2001 (2001-06-27)

## Beschreibung

Die vorliegende Erfindung betrifft die Verwendung eines porösen Kunststoff-Formkörpers als Belüfter in Abwasserreinigungsanlagen.

Bei den meisten heute in der Abwasserreinigung eingesetzten biologischen Verfahren wird in erster Linie die Fähigkeit von Mikroorganismen ausgenutzt, unter Sauerstoffverbrauch organische Schadstoffe zu oxidieren. Damit den Mikroorganismen eine ausreichende Menge an Sauerstoff zur Verfügung steht, muss Luft in das Abwasser eingebracht werden. Darüber hinaus soll die Luftzufuhr eine Umwandlung von Ammoniumionen in Nitrat bewirken, um so den Ammoniumgehalt im Abwasser zu reduzieren.

Die Belüftung des Abwassers erfolgt gewöhnlich durch Einblasen von Luft durch poröse Belüfter. Diese sind beispielsweise aus keramischem Material, das jedoch den Nachteil aufweist, relativ spröde und damit bruchempfindlich zu sein. Darüber hinaus besitzen keramische Materialien eine raue Oberfläche, auf der sich leicht Ablagerungen und Verkrustungen bilden können, was dann Verstopfungen des Belüfters zur Folge hat.

Weiterhin ist bekannt, Formkörper aus Elastomeren, die mit durchgängigen Schlitzen versehen sind, als Belüfter einzusetzen. Nachteilig ist jedoch, dass solche Belüfter einen hohen Druckverlust aufweisen, aufgrund ihrer Herstellungsweise hohen Verschleiß zeigen und nur mit geringen Volumenströmen belastbar sind. Ferner sind die Elastomere gewöhnlich aus EPDM und damit nicht gegen alle Arten von Abwasser chemisch beständig.

Ein Filterrohr mit Flüssigkeitsdurchtrittsöffnungen und einer außenseitig angeordneten porösen Filterschicht aus einem aufgesinterten Kunststoffmaterial ist im Dokument EP-1 101 873 beschrieben.

Ein Multischichtfilter, das als Belüfter von Abwasser verwendet werden kann, ist im Dokument GB1 051 032 beschrieben.

Die der vorliegenden Erfindung zugrunde liegende Aufgabe besteht darin, die Verwendung eines Kunststoff-Formkörpers als Belüfter bereit zu stellen, wobei der Belüfter einen niedrigen Druckverlust, eine gute mechanische Stabilität, hohe Belastbarkeit und eine hohe Sauerstoffertragsleistung aufweisen soll und der leicht von Ablagerungen und Verkrustungen gereinigt werden kann.

Diese Aufgabe wird durch die Verwendung eines Kunststoff-Formkörpers mit Poren, die an der Luftabströmseite (A) kleiner sind als an der gegenüber liegenden Luftanströmseite (B), gelöst.

Zur Herstellung des Belüfters wird Kunststoffmaterial in Form eines Granulats oder eines Pulvers in einer Form, wie einer Sinterform, gesintert. Die mit dem Kunststoffgranulat oder -pulver gefüllte Form wird in einem Sinterofen an einer Seite (A) stärker erwärmt als an der gegenüber liegenden Seite (B), wodurch das als Granulat und/oder Pulver eingesetzte Kunststoffmaterial an der wärmeren Seite stärker zusammensintert als an der gegenüber liegenden Seite und sich dadurch an der Seite (A) Poren mit einem kleineren Porendurchmesser bilden als an der Seite (B).

Beim Sintern schmelzen die Körner des Kunststoffgranulats und/oder -pulvers lediglich an der Oberfläche an, aber schmelzen nicht vollkommen durch, wodurch sich ein Sinterverbund ergibt, welcher nach dem Abkühlen zu einem fest haftenden und stabilen Formkörper führt, der dennoch porös ist. Die Temperatur, bei der die Körner des Kunststoffgranulats und/oder -pulvers lediglich an der Oberfläche anschmelzen, aber nicht vollkommen durchschmelzen, wird im folgenden mit "Anschmelztemperatur" bezeichnet.

Der Kunststoff-Formkörper sollte bevorzugt aus einem hoch- oder ultrahochmolekularen Material sein, um zu vermeiden, dass das Kunststoffmaterial zu sehr zusammenschmilzt und die Porenbildung minderwertig wird. Bevorzugt wird in der vorliegenden Erfindung Polyethylen (mit hoher Molmasse (etwa 200.000 - 5 Mio. g/mol), Kurzbezeichnung: HD-HMW-PE, oder ultrahoher Molmasse (3 Mio. 6 Mio. g/mol), Kurzbezeichnung: UHMW-HD-PE) oder aber Polypropylen verwendet. Mitunter ist auch Polyethylen mittlerer Dichte verwendbar, sofern die Temperaturbehandlung zur Vermeidung eines vollständigen Aufschmelzens vorsichtig durchgeführt wird. Bevorzugt jedoch werden die höhermolekularen Materialien verwendet.

Die mittlere Korngröße des eingesetzten Kunststoffgranulats oder -pulvers sollte bevorzugt im Bereich zwischen 1 µm und 5 mm liegen. Insbesondere bevorzugt wird ein Granulat, in dem 80% der Körner größer als 500 µm sind, ein Pulver, in dem 65% der Körner eine Größe von 250 bis 500 µm aufweisen, oder eine Mischung von diesen eingesetzt.

Die Sintertemperatur und die Dauer der Sinterbehandlung wird so gewählt, dass der gewünschte Verbundgrad mit der gewünschten Porosität erreicht wird. Vorzugsweise liegt die Sintertemperatur im Bereich zwischen 80 °C und 220 °C, bevorzugt zwischen 120 °C und 160 °C, je nachdem, welches Kunststoffmaterial verwendet wird. Beispielsweise sollte für einen Kunststoff, der eine Anschmelztemperatur von 80 °C aufweist, idealerweise eine Sintertemperatur von 150 °C gewählt werden. Die Dauer der Temperaturbehandlung ist bevorzugt im Bereich zwischen 30 Minuten und 180 Minuten, insbesondere 60 Minuten bis 120 Minuten. Die Länge der Temperaturbehandlung muss so gewählt sein, dass eine vollständige Durchwärmung des Kunststoffgranulats oder -pulvers von der Seite (A) bis hin zur gegenüber liegenden Seite (B) gewährleistet ist.

Als besonders vorteilhaft hat es sich erwiesen, wenn während der Temperaturbehandlung ein Temperaturgradient zwischen der Seite (A) und der Seite (B) von 1 bis 25 °C, bevorzugt 5 bis 15 °C, eingestellt wird.

Die Poren des Belüfters weisen an der Luftabströmseite (A) bevorzugt einen mittleren Durchmesser im Bereich von 1 µm bis 1500 µm, insbesondere bevorzugt 10 µm bis 1000 µm, und an der Luftanströmseite (B) bevorzugt einen mittleren Durchmesser im Bereich von 5 µm bis 3000 µm, insbesondere bevorzugt 20 µm bis 1500 µm, auf. Außerdem ist der mittlere Porendurchmesser an der Luftabströmseite (A) vorzugsweise um 20 bis 80 % kleiner als der mittlere Porendurchmesser an der Luftanströmseite (B).

Vorzugsweise weist der Belüfter eine Dicke von 2 bis 30 mm, besonders bevorzugt von 3 bis 12 mm auf.

Neben der äußerst einfachen Herstellung kann durch Wahl der Größe des granularen oder pulverförmigen Kunststoffmaterials, durch die Dauer der Temperaturbehandlung und die Erwärmungstemperatur die Porengröße beliebig eingestellt werden. Damit können auf einfache Weise Belüfter verschiedener Porigkeit hergestellt werden. Ein zusätzlicher Vorteil besteht darin, dass zur Herstellung der Belüfter keinerlei Zusätze wie Harze, Kleber oder dergleichen erforderlich sind.

Als besonders zweckmäßig hat es sich erwiesen, wenn am Ende der Temperaturbehandlung eine kurzzeitige Temperaturerhöhung zur gezielten Erwärmung der äußeren Oberflächenschicht der Seite (A) des Belüfters erfolgt. Hierdurch wird die Außenschicht des Belüfters kurzzeitig stärker erwärmt, so dass das Kunststoffmaterial dort etwas stärker auf- und zusammenschmilzt und sich dort ein noch kleinerer Porendurchmesser ergibt.

Mit dem obenbeschriebenen Herstellungsverfahren lassen sich Belüfter jeglicher Art fertigen, bevorzugt Platten- oder Rohrbelüfter.

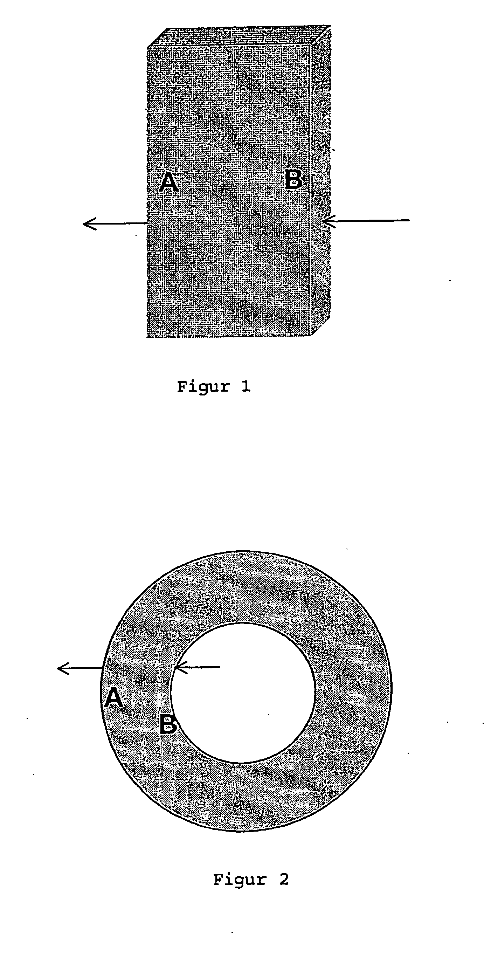

Die Erfindung wird nachfolgend anhand der beigefügten Figuren beschrieben, in denen
Figur 1 und Figur 2 Belüfter darstellen. Insbesondere ist Figur 1 eine Aufsicht auf einen Belüfter, der als Plattenbelüfter verwendbar ist, während Figur 2 eine Aufsicht auf einen als Rohrbelüfter einsetzbaren Belüfter darstellt. Die Pfeile in den Figuren 1 und 2 kennzeichnen die Durchströmrichtung der Luft durch den Belüfter.

Der in Figur 1 dargestellte Plattenbelüfter weist an seiner mit (A) gekennzeichneten Luftabströmseite kleinere Poren auf als an der mit dem Buchstaben (B) gekennzeichneten Luftanströmseite. Bei seinem Einsatz in einer Abwasserreinigungsanlage wird der Belüfter so verwendet, dass die Luftabströmseite (A), die die kleineren Poren aufweist, dem Abwasser, in das Luft eingeleitet werden soll, zugewandt ist.

Im Fall des Rohrbelüfters, der in Figur 2 dargestellt ist, befinden sich die kleineren Poren an der Rohraußenseite (A) und die größeren Poren an der Rohrinnenseite (B). Auch in diesem Fall ist die die kleineren Poren aufweisende Seite (A), also die Rohraußenseite, dem zu belüftenden Abwasser zugewandt. Bei der Belüftung des Abwassers strömt Luft von der Rohrinnenseite (B) zur Rohraußenseite (A), wo sie in das Abwasser geleitet wird.

Im Fall des Rohrbelüfters ist es möglich, an der Rohrinnenseite ein mit Schlitzen versehenes Zentralrohr zur Verstärkung anzubringen. Dieses Rohr besteht bevorzugt aus PVC oder temperaturbeständigem Polyethylen.

Bei der Herstellung des mit einem Zentralrohr verstärkten Rohrbelüfters kann es vorgesehen werden, dass vor oder nach Beendigung der Temperaturbehandlung das Zentralrohr innenseitig gekühlt wird. Das Zentralrohr, das während der Temperaturbehandlung ebenfalls etwas erwärmt wird, wird hierdurch quasi abgeschreckt, um zu vermeiden, dass es aufgrund des einsetzenden Schrumpfens des Kunststoffmaterials beim Abkühlen zusammengedrückt wird.

Aufgrund der Eigenschaft, dass der Porendurchmesser an der Luftabströmseite (A) kleiner ist als an der gegenüber liegenden Luftanströmseite (B), wird beim Durchströmen mit Luft ein geringerer Druckverlust als bei einem Material mit einheitlichen Porengrößen erzielt. Ein geringer Druckverlust wiederum ermöglicht eine effektive Begasung bei niedrigen Drucken, wodurch eine hohe Ausbeute der zur Verfügung stehenden Belüfterleistung erreicht wird. Ferner lässt sich die Oberfläche des Belüfter sehr leicht von Ablagerungen und Verkrustungen befreien, beispielsweise durch einfaches Schockbelüften. Schließlich sind die Belüfter mechanisch außerordentlich stabil und bruchfest.

### Beispiel

### Herstellung eines Rohrbelüfters

Als Sinterofen wird eine mit einem Heizmantel heizbare kreisrunde Aluminiumform verwendet, in deren Mitte ein Dorn, ebenfalls aus Aluminium, eingestellt wird. Der Zwischenraum zwischen dem Dorn und der Aluminiumform wird mit 610 g HDPE Gries (ρ = 0,952 - 0956 g/cm³, 80% der Körner > 500 µm) gefüllt und eingerüttelt. Der Zwischenraum zwischen Aluminiumform und Dorn beträgt 5 mm, so dass der resultierende Belüfter eine entsprechende Wandstärke, d.h. Dicke, aufweist. Die Mischung wird durch Erwärmen der Aluminiumform über einen Heizmantel auf 150 °C für 70 min gesintert. Der Temperaturgradient zwischen der der Aluminiumform zugewandten Seite und der dem Dorn zugewandten Seite beträgt etwa 7 °C. Dann wird auf Raumtemperatur abgekühlt und entformt.

Der so hergestellt Belüfter weist an der Luftabströmseite (A) eine Porengröße im Bereich von 150 bis 350 µm mit einem mittleren Porendurchmesser von 290 µm und an der Luftanströmseite (B) eine Porengröße im Bereich von 400 bis 850 µm mit einem mittleren Porendurchmesser von 490 µm auf.

Zur Bestimmung der Porengröße werden Probenstücke aus dem Belüfter herausgeschnitten und sowohl im Stereomikroskop als auch unter dem Rasterelektronenmikroskop untersucht. In den entsprechenden Aufnahmen werden die Porengrößen durch Ausmessen bestimmt.

Die hier angegebenen mittleren Porendurchmesser stellen das arithmetische Mittel dar, das aus einer Vielzahl an konkret ausgemessenen Porendurchmessern bestimmt wurde.

## Patentansprüche

1. Verwendung eines porösen Kunststoff-Formkörpers mit Poren, die an der Luftabströmseite (A) kleiner sind als an der gegenüber liegenden Luftanströmseite (B), als Belüfter.

2. Verwendung gemäß Anspruch 1, wobei der Kunststoff-Formkörper aus Polyethylen oder Polypropylen ist.

3. Verwendung gemäß Anspruch 1 oder 2, wobei die Poren an der Luftabströmseite (A) einen mittleren Durchmesser von 1 µm bis 1500 µm und an der Luftanströmseite (B) einen mittleren Durchmesser von 5 µm bis 3000 µm aufweisen.

4. Verwendung gemäß einem oder mehreren der Ansprüche 1 bis 3, wobei der mittlere Porendurchmesser an der Luftabströmseite (A) um 20 bis 80 % kleiner ist als der mittlere Porendurchmesser an der Luftanströmseite (B).

5. Verwendung gemäß einem oder mehreren der Ansprüche 1 bis 4, wobei der Belüfter ein Plattenbelüfter oder ein Rohrbelüfter ist.

## Claims

1. Use of a porous plastic moulding with pores which are smaller on the air outflow side (A) than on the opposite air inflow side (B) as an aerator.

2. Use according to claim 1, wherein the plastic moulding is made from polyethylene or polypropylene.

3. Use according to claim 1 or 2, wherein the pores on the air outflow side (A) have an average diameter of 1 µm to 1,500 µm and on the air inflow side (B) an average diameter of 5 µm to 3,000 µm.

4. Use according to one or more of claims 1 to 3, wherein the average pore diameter on the air outflow side (A) is 20 to 80 % smaller than the average pore diameter on the air inflow side (B).

5. Use according to one or more of claims 1 to 4, wherein the aerator is a plate aerator or a tube aerator.

## Revendications

1. Utilisation d'un corps de forme poreux en matière synthétique, comportant des pores qui sont plus petits sur le côté du départ de l'air (A) que sur le côté de l'arrivée d'air (B) situé en regard, en tant qu'aérateur.

2. Utilisation selon la revendication 1, dans laquelle le corps de forme en matière synthétique est en polyéthylène ou en polypropylène.

3. Utilisation selon la revendication 1 ou 2, dans laquelle les pores, sur le côté du départ de l'air (A), présentent un diamètre moyen de 1 µm jusqu'à 1500 µm et, sur le côté de l'arrivée de l'air (B), un diamètre moyen de 5 µm jusqu'à 3000 µm.

4. Utilisation selon l'une ou plusieurs des revendications 1 à 3, dans laquelle le diamètre de pore moyen, sur le côté du départ de l'air (A), est de 20 à 80 % plus petit que le diamètre de pore moyen sur le côté de l'arrivée de l'air (B).

5. Utilisation selon l'une ou plusieurs des revendications 1 à 4, dans laquelle l'aérateur consiste en un aérateur à plaques ou en un aérateur tubulaire.
